# EUROPEAN PATENT APPLICATION

(11) **EP 1 570 754 A2**
(43) Date of publication of application: **07.09.2005**
(21) Application number: 04078175.9
(22) Date of filing: 22.11.2004
(51) Int. Cl.: A23N 1/00

(54) **System for the extraction of the liquid component from drupes**

(30) Priority: 05.03.2004 IT RE20040015
(71) Applicant: Ing. Bonfiglioli S.p.A., 40050 Castello d'Argile (Bologna) (IT)
(72) Inventor: Bonfiglioli, Giancarlo c/o ING. BONFIGLIOLI S.P.A., 40050 Castello d'Argile (Bologna) (IT)
(74) Representative: Corradini, Corrado

(57) **Abstract**

A System (1) for the extraction of the liquid component from drupes comprising: a cylinder oil mill (2) suitable for crushing the drupes to obtain a paste from it; a plurality of mullers (3) for the homogenisation of the paste coming from the cylinder oil mill (2); a decanter (4) for the extraction of the liquid component from the homogenised paste coming from the mullers (3), where said plurality of mullers (3) is arranged in parallel, each muller (3) being suitable for individually receiving the paste coming from said cylinder oil mill (2).

## Description

The present invention refers to a system for the extraction of the liquid component from drupes, in accordance with the preamble of claim 1.

Subordinately, the present invention refers to a system for the extraction of oil from oily substances like olives, dates and palm fruits, suitable for being entirely housed on a trailer that hooks onto a motor vehicle.

Plants, known as oil mills, for producing olive oil through their milling are known.

In conventional plants, old stone wheels, mullers, which squash olives by mechanical pressure, were used to crush the olives.

From the muller, the paste was sent directly to the press to obtain the oil by mechanical pressing.

Recently, since the crushing carried out by the mullers is insufficient, the operation is completed with a mixing machine, known as a kneader, which allows a better production yield to be obtained.

Nowadays, the production of oil from olives is carried out with continuous plants in which the olives, after washing in a washer, are stoned in a stoner with rotating paddle wheels that takes care of separating the paste from the stone.

As an alternative to the use of the stoner, a cylinder oil mill can be used and it is not excluded to use a stoner and a cylinder oil mill in parallel.

Thereafter, the paste is pushed to the kneader and from here to a horizontal centrifuge, known as a decanter, which extracts the oil from the olive paste.

Lastly, the liquid component coming out from the decanter and known as oily must is sent towards a vertical centrifuge for the separation of oil and water.

In oil extraction systems of the prior art, to increase the ability of the oil production plant measures have been taken to arrange a plurality of mullers arranged in series with each other and extending vertically.

In practice, the olive paste passes from one muller to the next by falling from the one arranged highest up.

These systems, with a plurality of mullers in series arranged vertically of the prior art, have some drawbacks and disadvantages.

Indeed, should one wish to extract oil from two batches of olives having different characteristics and/or of different origin without wanting to mix them, one is forced to wait for all of the mullers to be emptied, including the bottom one, before proceeding to feed the next batch.

Therefore, there is a strong requirement to have a system for the extraction of the liquid component from drupes that is flexible so as to allow the processing of batches of different origin, keeping them separate, and that is cost-effective and reliable.

The purpose of the present invention is that of providing a system for the extraction of the liquid component from drupes having structural and functional characteristics such as to satisfy the aforementioned requirements and at the same time to avoid the aforementioned drawbacks with reference to the prior art.

Such a purpose is accomplished through a system for the extraction of the liquid component from drupes in accordance with claim 1.

The dependent claims outline preferred and particularly advantageous embodiments of the system according to the invention.

Further characteristics and advantages of the invention shall become clear from reading the following description provided as an example and not for limiting purposes, with the help of the figures illustrated in the attached tables, in which:
- figure 1 shows a schematic view from above of a system for the extraction of the liquid component from drupes in accordance with the present invention;
- figure 2 shows a schematic side view of the system of figure 1;
- figure 3 shows a schematic view from above of a cylinder oil mill for the system of figure 1;
- figure 4 shows the section IV-IV of the cylinder oil mill of figure 3.

With reference to the aforementioned figures, a system for the extraction of the liquid component from drupes in accordance with the present invention is globally indicated with 1.

In the rest of the present description explicit reference shall be made to olives as an example but not for limiting purposes.

In a preferred embodiment of the present invention the system 1 comprising a cylinder oil mill 2 of olives to obtain an olive paste from them, a plurality of mullers 3, in the illustrated example four in number, 3a, 3b, 3c, 3d, and a decanter 4.

Each component shall be described in greater detail hereafter.

Said system 1 can be arranged on a support frame 100 provided with support feet 110.

Advantageously, said mullers 3 are arranged in parallel, i.e. so as to be able to individually receive the paste coming from the cylinder oil mill 2.

By paste, in the following invention, we mean any pulp that can be obtained from the mechanical crushing of drupes comprising both the liquid and solid part, in particular olive paste.

Operatively, the olives, after having been collected, defoliated and cleaned of the branches, are fed into a delivery hopper 6 at the outlet from which departs a first transporter, for example an elevator with a conveyor belt 7, preferably made from anti-acid rubber.

The conveyor belt 7 conveys the olives from the hopper 6 to a washer 8, preferably a hydropneumatic washer, where the olives undergo a delicate wash generally with water at room temperature.

Of course, this washing operation is not totally necessary, however, it contributes to improving the quality of the olives and therefore of the oil.

After washing in the washer 8, the washed olives are transferred to a second transporter, for example a tubular Archimedean screw elevator 10, which takes them to a machine with rotating paddle wheels, known as a stoner 9, which compress the olives against a generally cylindrical fixed grid with a predetermined diameter of the holes, separating the paste from the stone that is recovered integral.

A third transporter 11, for example a further tubular Archimedean screw elevator, transports the washed olives from the washer 8 to the cylinder oil mill 2 or, alternatively, according to what is desired, picks up the olives from the stoner 9.

The olives coming from the stoner 9 are not generally subjected to crushing, but are sent directly to any of the four mullers 3a, 3b, 3c, 3d.

However, we do not exclude the possibility of sending the stoned olives to the cylinder oil mill 2 or tipping the stoned olives into more than one muller 3 with or without olives subjected to crushing.

Substantially, the stoner 9 can work in parallel or in series with the cylinder oil mill 2 or can be totally absent.

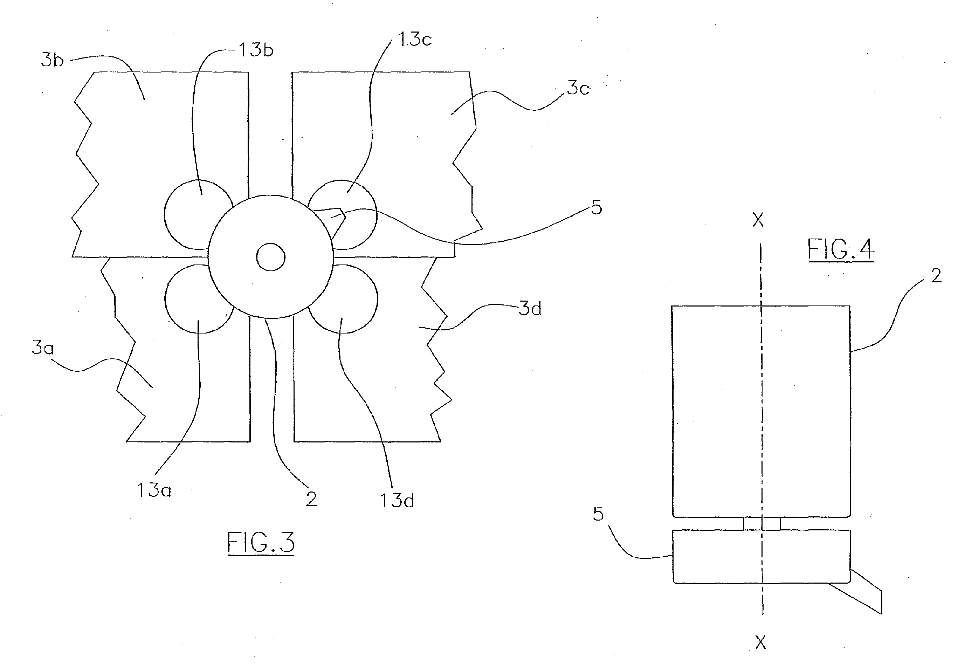

The cylinder oil mill 2, schematically illustrated in figures 3 and 4, consists of a container that is generally cylinder-shaped, in which the olives are crushed by suitable mechanical elements that move at high speeds, about 3000 revolutions per minute (power of 18 HP).

The cylinder oil mill 2 can, for example, be with hammers, with toothed discs or else a muller.

Below the cylinder oil mill 2 there is a mobile pourer 5 equipped with a shutter that pours the crushed olives in the form of a paste, generally not totally homogeneous, in one of the mullers 3.

The pourer 5 is rotatable around a vertical rotation axis X-X, to be able to direct the product to the desired muller 3.

In order to optimise the use of the four mullers 3a, 3b, 3c, 3d, the pourer 5 discharges the paste coming out from the same batch of olives selectively even in many mullers 3 according to needs.

Since the time of permanence of the olives in the cylinder oil mill 2 is about one third the time of permanence of the paste in each muller 3, thanks to the mobile pourer 5 it is possible to use a single cylinder oil mill 2 to crush olives of distinct batches sending the olive paste of each batch to different mullers 3, avoiding them being mixed.

This allows optimal and versatile use of the system in accordance with the invention.

The mullers 3a, 3b, 3c, 3d, schematically illustrated in the drawings, comprise an inlet opening 13 where the paste crushed by the cylinder oil mill 2 is poured, a homogenisation tank with rotating paddle wheels of a suitable shape actuated by a motor. Moreover, they are equipped with a pump, generally having one screw with variable speed, for transferring the paste to the decanter 4.

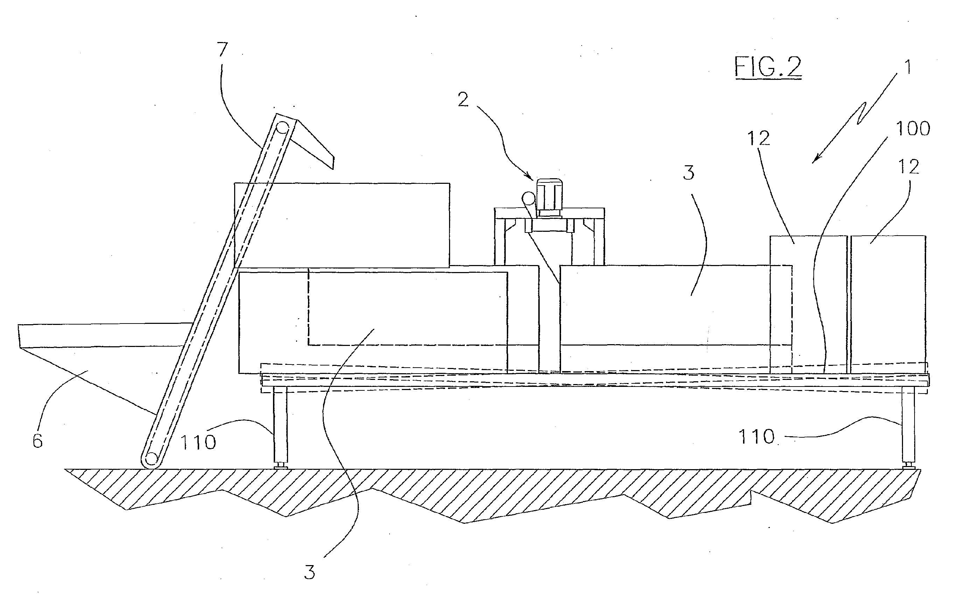

In order to ease the emptying of the mullers 3 it is possible to foresee the possibility of varying the slope of the frame 100, for example by varying the height of the feet 110, as shown with a broken line in figure 2.

Substantially, the slope eases the sliding of the olive paste towards the outlet of the muller 3 for the transfer to the decanter 4.

The inlet openings 13a, 13b, 13c, 13d of the mullers are arranged below the mobile pourer 5 so as to selectively receive the crushed olive paste by falling.

In practice, the pourer 5, rotating, goes above the opening 13 of the desired muller.

The decanter 4 is a centrifugal separator with a horizontal axis that allows the separation of the three phases present in the paste: oil, water and olive residue, having a different specific weight by means of centrifugal force.

In practice, the decanter 4 is a machine that has an Archimedean worm screw inside it actuated by a motor. Example orders of magnitude can be a power of 40 kW and 3000 rpm.

The decanter 4 can be with three outlets or with two outlets and generally foresees the addition of water during operation.

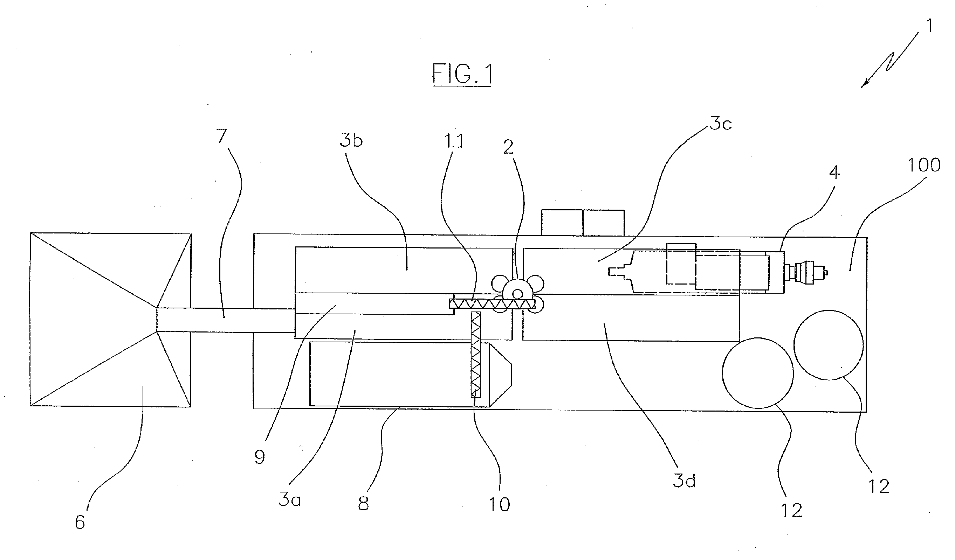

In the decanter with three outlets, two of which being liquid outlets, i.e. for oil and vegetable water, these are pumped to two centrifugal separators 12, as can be seen in figure 1.

In the decanter with two outlets, with just one liquid phase, i.e. oily must, this is pumped to a single centrifugal separator 12.

The centrifugal separator 12, generally with a vertical axis, allows the oil to be separated from the water on the principle of separation of different substances by specific weight, in a field of centrifugal forces.

The system 1 can be controlled by an automatic control system in order to optimise the processing steps without the help of an expert operator.

As can be appreciated from that which has been described above, the system for the extraction of the liquid component from drupes according to the present invention allows the requirements to be satisfied and the drawbacks mentioned in the introductory part of the present description with reference to the prior art to be overcome.

Indeed, the system for the extraction of the liquid component from drupes allows working in parallel with many mullers.

Moreover, said system allows the production efficiency to be optimised through the use of a single cylinder oil mill that serves many mullers thanks to the mobile pourer.

Of course, a man skilled in the art can bring numerous modifications and variants to the system for the extraction of the liquid component from drupes described above in order to satisfy contingent and specific requirements, all of which are covered by the scope of protection of the invention, as defined by the following claims.

## Claims

1. System (1) for the extraction of the liquid component from drupes comprising:
- a cylinder oil mill (2) suitable for crushing the drupes to obtain a paste from it;
- a plurality of mullers (3) for the homogenisation of the paste coming from the cylinder oil mill (2);
- a decanter (4) for the extraction of the liquid component from the homogenised paste coming from the mullers (3),
**characterised in that** said plurality of mullers (3) is arranged in parallel, each muller (3) being suitable for individually receiving the paste coming from said cylinder oil mill (2).

2. System (1) according to claim 1, wherein said cylinder oil mill (2) comprises a mobile pourer (5) suitable for pouring the paste individually to the mullers (3).

3. System (1) according to claim 1, wherein said pourer (5) is rotatable around a vertical rotation axis (X-X).

4. System (1) according to claim 1 or 2, further comprising:
- a delivery hopper (6) suitable for receiving the drupes;
- a washer (8) for washing the drupes;
- a first transporter (7) to take the olives from the delivery hopper (6) to the washer (8);
- a stoner (9);
- a second transporter (10) to take the olives from the washer (8) to the stoner (9).
- a third transporter to take the olives to the cylinder oil mill.

5. System (1) according to claim 1 or 2, further comprising a centrifugal separator (12) for the separation of the oil.

6. System (1) according to claim 1 or 2, arranged above a support frame (100) .

7. System (1) according to claim 6, wherein said mullers (3) can be tilted to ease the outflow of the paste by acting on the inclination of the frame (100).
